# EUROPEAN PATENT SPECIFICATION

(11) **EP 3 500 603 B1**
(45) Date of publication and mention of the grant of the patent: **17.06.2020**
(21) Application number: 17748618.0
(22) Date of filing: 01.08.2017
(51) Int. Cl.: C08F 214/26, C08F 2/24, C09D 127/18, C08F 16/24

(54) **FLUOROPOLYMERS COMPRISING TETRAFLUOROETHYLENE AND ONE OR MORE PERFLUORINATED ALKYL ALLYL ETHER COMONOMERS**
FLUOROPOLYMERE AUS TETRAFLUORETHYLEN UND EIN ODER MEHR PERFLUORIERTE ALKYL ALLYLETHER COMONOMERE
FLUOROPOLYMERES COMPRENANT TETRAFLUOROETHYLENE ET UN OU PLUSIEURS PERFLUORÉS ALLYLE ETHER COMONOMÈRES

(30) Priority: 17.08.2016 EP 16184503
(43) Date of publication of application: 26.06.2019
(73) Proprietor: 3M Innovative Properties Company, St. Paul, MN 55133-3427 (US)
(72) Inventor: HINTZER, Klaus, D-41453 Neuss (DE); HIRSCHBERG, Markus, E., D-41453 Neuss (DE); KOENIGSMANN, Herbert, D-41453 Neuss (DE); ZIPPLIES, Tilman, C., D-41453 Neuss (DE); KASPAR, Harald, D-41453 Neuss (DE)
(74) Representative: Hettstedt, Stephan
(86) International application number: PCT/US2017/044951
(87) International publication number: WO 2018/034838

(56) References cited:
- EP-A1- 2 284 200
- EP-A1- 2 409 998
- EP-A1- 2 803 690
- EP-A1- 2 803 691
- US-A1- 2015 344 605

## Description

### Background

Copolymers of tetrafluoroethylene (TFE) are known. Copolymers made from TFE and perfluoro (alkyl vinyl) ethers (PAVE) are commercially available and typically referred to as "PFA's". Examples of PFA polymers include copolymers made from TFE and from PPVE-1 (US-A-3 635 926) as well as terpolymers made from TFE/PPVE-1 and HFP (DE-A-26 39 109) and copolymer products which contain perfluoro ethyl vinyl ether (WO-A-97/07147) or perfluoro methyl vinyl ether (US-A-4 864 006) in place of PPVE-1. Other examples include the polymers described in EP 1 328 562 B1. In JP 2004,244 504 A1 copolymers of TFE with of alkyl allyl ethers are disclosed that are reported to have good properties when it comes to light transmission. The use of perfluoroalkyl vinyl and allyl ethers with further ether units in the side have been reported as comonomers with tetrafluoroethylene for producing modified PTFE in U.S. Pat. No. 7,060,772 (Hintzer et al).

Fluorinated polymers with a high content of TFE are typically prepared by aqueous emulsion polymerization. In this type of reaction the polymerization is carried out in an aqueous phase and typically requires the presence of a fluorinated emulsifier. Perfluorinated alkanoic acids having an alkane chain of up to 8 carbon atoms have been widely suggested for this purpose in the art. Due to the poor biodegradation of these emulsifiers there is a desire to avoid their use. Methods have been developed to remove the emulsifiers from the resulting polymer dispersions. Polymerizations without any fluorinated emulsifiers or with more biodegradable fluorinated emulsifiers have also been developed.

It has been found that perfluorinated alkanoic acids, in particular those having from 6 to 12 carbon atoms, can be generated in the production of some type of fluoropolymers and can then be extracted from the fluoropolymers even if no such perfluorinated alkanoic acids are used as emulsifiers or are added during the production of the polymers. Therefore, there is a desire to further provide fluoropolymers that have good mechanical properties but contain only insignificant amounts of extractable perfluorinated alkanoic acids.

### Summary

In one aspect of the present disclosure there is provided a tetrafluoroethylene copolymer having a melting point of from about 250 °C to about 326 °C, a melt flow index (MFI at 372 °C and 5 kg load) of 0.5-50 grams /10 minutes and having at least 89 % by weight of units derived from tetrafluoroethylene and from about 0.5 to about 6 % by weight of units derived from at least one perfluorinated alkyl allyl ether (PAAE) comonomer and from 0 to 4 % by weight of units derived from one or more co-polymerizable optional comonomers, wherein the total amounts of units of the polymer gives 100% by weight and wherein the at least one PAAE corresponds to the general formula:

CF₂=CF-CF₂-O-Rf (I)

wherein Rf corresponds to a perfluoro-alkyl unit selected from the group consisting of: perfluoromethyl (CF3), perfluoro-ethyl (C2F5), perfluoro-propyl (C3F7) and perfluoro-butyl (C4F9).

In another aspect of the present disclosure there is provided an aqueous dispersion comprising the tetrafluoroethylene copolymer.

In a further aspect there is provided a method for producing the tetrafluoroethylene copolymer above comprising
(a) copolymerizing tetrafluoroethylene, the one or more perfluoro alkyl allyl ethers and, optionally, the one or more copolymerizable optional comonomers through aqueous emulsion polymerization in the appropriate amounts so as to obtain a reaction mixture containing the tetrafluorethylene copolymer and wherein the polymerization is carried out without added perfluorinated alkanoic acid emulsifiers having from 6 to 12 carbon atoms, and, optionally, (b) subjecting the reaction mixture to anion exchange treatment in the presence of one or more non-fluorinated emulsifier, and, optionally (c) isolating the copolymer.

In yet another aspect there is provided a method for making a shaped article wherein the method comprises bringing the tetrafluoroethylene copolymer above to the melt and shaping the molten polymer.

In another aspect of the present disclosure there is provided an article comprising the tetrafluoroethylene copolymer above.

The copolymers are melt-processable and have a very low amount of extractable perfluorinated alkanoic acids having from 6 to 12 carbon atoms.

### Detailed Description

In this application:
Terms such as "a" or "an" are meant to encompass "one or more" and are used interchangeably with the term "at least one".

Any numerical ranges of amounts of ingredients or parameters describing physical/mechanical properties are inclusive of their end points and non-integral values between the endpoints unless stated otherwise (e.g. 1 to 5 includes 1, 1.5, 2, 2.75, 3.80, 4, 5).

The tetrafluoroethylene copolymers of the present disclosure comprise at least one perfluorinated alkyl allyl ether (PAAE) as comonomer. The polymers typically contain at least 89 % by weight of units derived from TFE, preferably at least 94 % by weight (based on the weight of the copolymer).

In one embodiment the copolymers consists essentially only of units derived from TFE and the one or more perfluorinated alkyl allyl ethers. "Consisting essentially of" as used herein refers to the absence of other comonomers, or the presence of units derived from other comonomers of less than 1.0 % by weight, preferably less than 0.1 % by weight.

Suitable perfluorinated alkyl allyl ether (PAAE's) include unsaturated ethers according to the general formula:

CF₂=CF-CF₂-ORf (I).

In formula (I) Rf represents a linear or branched, cyclic or acyclic perfluorinated alkyl residue. Rf may contain up to 10 carbon atoms, e.g. 1, 2, 3, 4, 5, 6, 7, 8, 9 or 10 carbon atoms. Preferably Rf contains up to 8, more preferably up to 6 carbon atoms and most preferably 3 or 4 carbon atoms. Rf may be linear, branched and it may contain or not contain a cyclic unit. Specific examples of Rf include perfluoromethyl (CF₃), perfluoroethyl (C₂F₅), perfluoropropyl (C₃F₇) and perfluorobutyl (C₄F₉), preferably C₂F₅, C₃F₇ or C₄F₉. In a particular embodiment Rf is linear and is selected from C₃F₇ or C₄F₉.

Perfluorinated alkyl allyl ethers as described above are either commercially available, for example from Anles Ltd., St. Peterburg, Russia, or can be prepared according to methods described in U.S. Pat. No. 4,349,650 (Krespan) or by modifications thereof as known to the skilled person.

Instead of using one comonomer also a combination of the above comonomers may be used.

The tetrafluoroethylene copolymers typically contain units derived from the PAAE comonomers in an amount of from about of 0.5 % by weight to about 6 % by weight based on the weight of the polymer, preferably from about 1.5 to 4.0 % by weight. In some embodiments the tetrafluoroethylene copolymers according to the present disclosure have
(i) from 0.5 to 4.0 % by weight of units derived from the at least one PAAE comonomer if the residue Rf in formula (I) is a perfluoromethyl; or
(ii) from 0.5 to 5.0 % by weight of units derived from the at least one PAAE comonomer if the residue Rf in formula (I) is a perfluoroethyl; or
(iii) from 0.5 to 6.0 % by weight of units derived from the at least one PAAE comonomer if the residue Rf in formula (I) is a perfluoropropyl or perfluorobutyl.

In one embodiment of the present disclosure the PAAE comonomers are used in a total amount of 0.02 to 1.9 mole percent, preferably from 0.2 to 1.9 mole percent based on the total amount of the copolymer.

The copolymers of the present disclosure may contain, optionally, units derived from further comonomers, they are referred to herein as "co-polymerizable optional comonomers". Units derived from the co-polymerizable optional comonomers may be present in the polymers according to the present disclosure in an amount of from 0 to 5 % by weight based on the weight of the copolymer. Such comonomers may be fluorinated or non-fluorinated but preferably are fluorinated, chlorinated or chlorinated and fluorinated. The copolymerizable optional comonomers contain an alpha-olefinic functionality, i.e. a CX₁X₂=CX₃- group wherein X₁,X₂ and X₃ are independently from each other F, Cl or H with the proviso that at least one is H or F. Preferably all of X₁, X₂ and X₃ are F. These optional comonomers may be functional comonomers, for example they may contain additional functional groups for example to introduce branching sites ("branching modifiers") or polar groups or end groups ("polarity modifiers"). Branching modifiers typically have a second alpha-olefinic group or a branched molecules themselves. Polarity modifiers include olefins having polar groups for example acid groups as additional functional groups. The optional comonomers include other perfluorinated alpha-olefins such as hexafluoropropene (HFP), or partially fluorinated alpha olefins such as vinylidenefluoride, vinylfluoride, or F and Cl containing olefins such as chlorotrifluoroethylene, or non-fluorinated alpha olefins such as ethane or propene. Preferably, no copolymerizable optional comonomers are being used. If copolymerizable optional comonomers are used, these comonomers, preferably do not contain a vinyl ether unit, i.e. a CX₁X₂=CX₃-O- unit with X₁, X₂ and X₃ being defined as above, and in particular perfluorinated alkyl vinyl ethers (PAVE's), or they contain them in an amount of less than 1 % by weight, preferably less than 0.5 % by weight, more preferably less than 0.01 % by weight based on the total weight of the polymer.

In one embodiment of the present disclosure the tetrafluoroethylene copolymer has from 94 to 99 % by weight units derived from tetrafluoroethylene and from 1 to 5 % by weight of units derived from the at least one PAAE and from up to 6 % by weight, preferably up to 4.4 % by weight of units derived from one or more coplymerizable optional comonomer selected from hexafluoropropene (HFP). The total amount of units of the polymer gives 100.0 % by weight and preferably, the copolymer does not contain any units derived from a PAVE.

In one embodiment of the present disclosure the copolymer consists essentially of TFE and the one or more PAAE's and the amount of the copolymerizable optional comonomers is less than 1.0 % by weight or 0 % by weight.

The copolymers of the present disclosure typically have a melting point of from about 250 °C to about 326 °C. In one embodiment the copolymers are high melting. They may have a melting point of from 270 °C to 326 °C and preferably from 286 °C to 316 °C.

The copolymers of the present disclosure are melt-processable. They typically have a melt flow index (MFI) at a temperature of 372 °C and a 5 kg load of from about 0.5 to 100 grams per 10 minutes, preferably from about 0.5 grams / 10 minutes to 50 grams /10 minutes. In one embodiment of the present disclosure, the copolymers are high melting and have a melting point of from 270 °C to 326 °C and a melt flow index (MFI at 372 °C and 5 kg load) of 0.5 to 19 grams /10 minutes. In another embodiment of the present disclosure, the copolymers are low melting and have a melting point of from 250 °C to 290 °C and have a melt flow index (MFI at 372 °C and 5 kg load) of from 31 grams / 10 minutes to 50 grams / 10 minutes.

The polymers according to the present disclosure are essentially free of extractable perfluorinated alkanoic acids, in particular no such acids with 6 to 12 carbon atoms. "Essentially free" in this context refers to amounts of less than 1,000 ppb, preferably less than 500 ppb and more preferably less than 200 ppb (based on the weight of polymer). Preferably, the polymers are essentially free of perfluorooctanoic acid. This means they contain extractable perfluorooctanoic acid in an amount of less than 100 ppb and preferably less than 50 ppb (based on the weight of the polymer), for example from 2 to 20 ppb (based on the weight of the polymer).

Perfluorinated alkanoic acids can be represented by the general formula

F₃C-(CF₂)n-COOM (II)

wherein n is an integer of 4 to 10. M is H in case of the free acid or a cation in case the acid is present as a salt. In case of perfluorooctanoic acid, n is 6 to give a total amount of carbon atoms of 8 ("C₈-acid").

The extraction is typically done by treating the polymer sample with methanol (at 50 °C for 16 hours) separating the polymer from the liquid phase and determining the amount of acid in the separated (extracted) liquid phase.

Therefore, as an advantage of the present disclosure, polymers are provided that have good mechanical properties but are essentially free of extractable alkanoic acids, in particular C₈ -acids. Such perfluorinated alkanoic acids are very poorly biodegradable and therefore, there is a desire to remove these materials from fluoropolymer products or to avoid their use and formation altogether. Even if no perfluorinated alkanoic acids are used in the production of the polymers, but alternative fluorinated emulsifiers or no emulsifiers are being used, it has been found that perfluorinated alkanoic acids (in particular perfluorinated C₆ to C₁₂ acids) can be generated in the production of some tetrafluoroethylene copolymers. Therefore, it is an advantage of the present disclosure that melt-processable TFE-copolymers can be prepared by avoiding the generation of these acids and the produced copolymers are essentially free of these acids.

The copolymers may be prepared by using the comonomers in effective amounts such that the resulting copolymer has a tensile strength at 23 °C of at least 18 MPa, for example between 20 and 60 MPa (DIN EN ISO 527-1). The copolymers may be polymerized by using the ingredients and their effective amounts in the ranges as described herein such that the resulting copolymer has an elongation at break at 23 °C of at least 250 % (length/length), in some embodiments between 250 and 400 % (DIN EN ISO 527-1). The copolymers may be polymerized by using the ingredients and their effective amounts in the ranges as described herein such that the resulting copolymer has a flexural modulus at 23 °C of at least 520, in some embodiments between 520 and 600 MPa ASTM D 790; injection molded bars, 127 by 12.7 by 3.2 mm). In cases where the copolymers are to be used in applications requiring a high stress cracking resistance, greater incorporation of the PAAE comonomer(s) into the polymer may be required compared to copolymers used in application where no high stress cracking resistance is needed. The environmental stress cracking resistance can be determined by the number of double folds on 200 µm films in the MIT folding endurance test according to ASTM D2176.

### Methods of preparing the polymers and their applications

The tetrafluoroethylene copolymers described herein may be prepared by emulsion or suspension polymerization in an aqueous phase. In case of emulsion polymerization an emulsifier is used. In case of a suspension polymerization no emulsifier is used. Emulsion polymerization is preferred as it results in stable dispersions. TFE is copolymerized in the presence of initiators and perfluorinated comonomers described above. The comonomers are used in effective amounts to produce a copolymer with the properties described herein. Effective amounts are within the amounts described and exemplified herein.

Typically, fluorinated emulsifiers are employed in the aqueous emulsion polymerization, however, the polymerization is carried out without adding any perfluorinated alkanoic acids, i.e. compounds according to the formula (II), and in particular the polymerization is carried out without adding perfluorinated octanoic acid.

Alternative fluorinated emulsifiers or non-fluorinated emulsifiers may be used instead. When used, a fluorinated alternative emulsifier is typically used in an amount of 0.01 % by weight to 1 % by weight based on solids (polymer content) to be achieved. Suitable alternative fluorinated emulsifiers include those that correspond to the general formula:

[R_{f}-O-L-COO⁻]ᵢXᵢ⁺ (III)

wherein L represents a linear or branched or cyclic partially or fully fluorinated alkylene group or an aliphatic hydrocarbon group, R_{f} represents a linear or branched, partially or fully fluorinated aliphatic group or a linear or branched partially or fully fluorinated group interrupted once or more than once by an ether oxygen atom, Xᵢ⁺ represents a cation having the valence i and i is 1, 2 and 3. In case the emulsifier contains partially fluorinated aliphatic groups it is referred to as a partially fluorinated emulsifier. Preferably, the molecular weight of the emulsifier is less than 1,500 g/mole. Specific examples are described in, for example, US Pat. Publ. 2007/0015937 (Hintzer et al.). Exemplary emulsifiers include: CF₃CF₂OCF₂CF₂OCF₂COOH, CHF₂(CF₂)₅COOH, CF₃(CF₂)₆COOH, CF₃O(CF₂)₃OCF(CF₃)COOH, CF₃CF₂CH₂OCF₂CH₂OCF₂COOH, CF₃O(CF₂)₃OCHFCF₂COOH, CF₃O(CF₂)₃OCF₂COOH, CF₃(CF₂)₃(CH₂CF₂)₂CF₂CF₂CF₂COOH, CF₃(CF₂)₂CH₂(CF₂)₂COOH, CF₃(CF₂)₂COOH, CF₃(CF₂)₂(OCF(CF₃)CF₂)OCF(CF₃)COOH, CF₃(CF₂)₂(OCF₂CF₂)₄OCF(CF₃)COOH, CF₃CF₂O(CF₂CF₂O)₃CF₂COOH, and their salts.

In one embodiment, the molecular weight of the emulsifier, preferably a partially fluorinated emulsifier, is less than 1500, 1000, or even 500 grams/mole.

In order to further improve the stability of the aqueous emulsion, it may be preferred to add one or more emulsifiers during or after the polymerization.

The emulsifier may be added as a microemulsion with a fluorinated liquid, such as described in U.S. Publ. No. 2008/0015304 (Hintzer et al.), WO Publ. No. 2008/073251 (Hintzer et al.), and EP Pat. No. 1245596 (Kaulbach et al.).

Instead of using alternative emulsifiers also the use of non-fluorinated emulsifiers is contemplated. They may be useful when polymers with low melting points or high MFI's are being produced. Examples for polymerizations of fluoropolymers with non-fluorinated emulsifiers are described in U.S. patent application No. US 2007/0149733.

The aqueous emulsion polymerization may be initiated with a free radical initiator or a redox-type initiator. Any of the known or suitable initiators for initiating an aqueous emulsion polymerization of TFE can be used. Suitable initiators include organic as well as inorganic initiators. Exemplary inorganic initiators include: ammonium- alkali- or earth alkali salts of persulfates, permanganic or manganic acids, with potassium permanganate preferred. A persulfate initiator, e.g. ammonium persulfate (APS), may be used on its own or may be used in combination with a reducing agent. The reducing agent typically reduces the half-life time of the persulfate initiator. Additionally, a metal salt catalyst such as for example copper, iron, or silver salts may be added.

The amount of the polymerization initiator may suitably be selected, but it is usually from 2 to 600 ppm, based on the mass of water used in the polymerization. The amount of the polymerization initiator can be used to adjust the MFI of the tetrafluoroethylene copolymers. If small amounts of initiator are used a low MFI may be obtained. The MFI can also, or additionally, be adjusted by using a chain transfer agent. Typical chain transfer agents include ethane, propane, butane, alcohols such as ethanol or methanol or ethers like but not limited to dimethyl ether, tertiary butyl ether, methyl tertiary butyl ether. The amount and the type of perfluorinated comomonomer may also influence the melting point of the resulting polymer.

The aqueous emulsion polymerization system may further comprise auxiliaries, such as buffers because some initiators are most effective within certain pH ranges, and complex-formers. It is preferred to keep the amount of auxiliaries as low as possible to ensure a higher colloidal stability of the polymer latex.

The polymerization is preferably carried out by polymerizing TFE and the comonomers simultaneously. Typically, the reaction vessel is charged with the ingredients and the reaction is started by activating the initiator. In one embodiment the TFE and the comonomers are then continuously fed into the reaction vessel after the reaction has started. They may be fed continuously at a constant TFE : comonomer ratio or at a changing TFE : comonomer ratio.

In another embodiment, a seeded polymerization may be used to produce the tetrafluoroethylene copolymers. If the composition of the seed particles is different from the polymers that are formed on the seed particles a core-shell polymer is formed. That is, the polymerization is initiated in the presence of small particles of fluoropolymer, typically small PTFE particles that have been homopolymerized with TFE or produced by copolymerizing TFE with one or more perfluorinated comonomers as described above. These seed particles typically have an average diameter (D₅₀) of between 50 and 100 nm or 50 and 150 nm (nanometers). Such seed particles may be produced, for example, in a separate aqueous emulsion polymerization. They may be used in an amount of 20 to 50 % by weight based on the weight of water in the aqueous emulsion polymerization. Accordingly, the thus produced particles will comprise a core of a homopolymer of TFE or a copolymer of TFE and an outer shell comprising either a homopolymer of TFE, or a copolymer of TFE. The polymer may also have one or more intermediate shells if the polymer compositions are varied accordingly. The use of seed particles may allow a better control over the resulting particle size and the ability to vary the amount of TFE in the core or shell. Such polymerization of TFE using seed particles is described, for example, in U.S. Pat. No. 4,391,940 (Kuhls et al.) or WO03/059992 A1.

The aqueous emulsion polymerization, whether done with or without seed particles, will preferably be conducted at a temperature of at least 65 °C, preferably at least 70 °C. Lower temperatures may not allow to introduce sufficient amounts of PAAE into the polymer to reach the required comonomer content. Upper temperatures may typically include temperatures of 80 °C, 90 °C, 100 °C, 110 °C, 120 °C, or even 150 °C.

The polymerization will preferably be conducted at a pressure of at least 0.5, 1.0, 1.5, 1.75, 2.0, or even 2.5 MPa (megaPascals); at most 2.25, 2.5, 3.0, 3.5, 3.75, 4.0, or even 4.5 MPa.

The aqueous emulsion polymerization usually is carried out until the concentration of the polymer particles in the aqueous emulsion is at least 15, 20, 25, or even 30 % by weight; at most 20, 30, 35, 40, or even 50 % by weight (also referred to as "solid content").

In the resulting dispersion, the average particle size of the polymer particles (i.e., primary particles) is at least 50, 100, or even 150 nm; at most 250, 275, 300, or even 350 nm (D₅₀). The particle sizes of dispersions can be determined by inelastic light scattering.

In one embodiment of the present disclosure, the copolymers are provided in the form of an aqueous dispersion, for example in coating applications.

The polymer dispersion can also be used to prepare dispersions with bimodal, and multimodal particle size distributions for example by mixing different dispersions, for example by mixing with one or more PTFE dispersions. These distributions may have a wide distribution, such as, for example, particle sizes ranging from 20 nm to 1000 nm as disclosed in e.g. US 5,576,381, EP 0 990 009 Bland EP 969 055 A1. Multi-modal fluoropolymer particle dispersions may present advantageous properties in coatings, such as better adhesion to the substrate and denser film formation.

After the conclusion of the polymerization reaction, the dispersions may be treated by anion exchange to remove the alternative fluorinated emulsifiers if desired. Methods of removing the emulsifiers from the dispersions by anion-exchange and addition of non-ionic emulsifiers are disclosed for example in EP 1 155 055 B1, by addition of polyelectrolytes are disclosed in WO2007/142888 or by addition of non-ionic stabilizers such as polyvinyl alcohols, polyvinyl esters.

The fluoropolymer content in the dispersions may be increased by upconcentration, for example using ultrafiltration as described, for example in US 4,369,266 or by thermal decantation (as described for example in US 3,037,953) or by electrodecantation. The solid content of upconcentrated dispersions is typically about 50 to about 70 % by weight.

Typically, dispersions subjected to a treatment of reducing the amount of the alternative fluorinated emulsifiers contain a reduced amount thereof, such as for example amounts of from about 1 to about 500 ppm (or 2 to 200 ppm) based on the total weight of the dispersion. Reducing the amount of the alternative fluorinated emulsifiers can be carried out for individual dispersion or for combined dispersion, e.g. bimodal or multimodal dispersions. Typically the dispersions are ion-exchanged dispersions, which means they have been subjected by an anion-exchange process to remove fluorinated emulsifiers or other compounds from the dispersions. While this treatment removes fluorinated emulsifiers and including perfluoroalkanoic acids, it is believed that this treatment is not effective to remove perfluorinated alkanoic acids generated during the production of the polymers to levels of extractable alkanoic acids of below 1,000 or 500 ppb, or even below 100 ppb or even below 30 ppb based on the weight of copolymer. Therefore providing polymers with low extractable perfluorinated alkanoic acids presents a great benefit.

Salts or ionic emulsifiers may be added to the dispersion to adjust their properties, in particular when the dispersion are being used for coating applications. For example, the level of conductivity may be adjusted by adding an anionic non-fluorinated surfactant to the dispersion as disclosed in WO 03/020836. Adding cationic emulsifiers to the dispersions is also possible, as described for example in WO 2006/069101.

Typical anionic non-fluorinated surfactants that may be used include surfactants that have an acid group, in particular a sulfonic or carboxylic acid group.

Non-fluorinated non-ionic surfactants may also be present in the dispersion, for example as the result of ion-exchange process to remove the fluorinated emulsifier or as the result of upconcentration process where non-ionic emulsifiers may have been added to increase the stability of the dispersions. Examples of non-ionic surfactants can be selected from the group of alkylarylpolyethoxy alcohols (although not preferred), polyoxyalkylene alkyl ether surfactants, and alkoxylated acetylenic diols, preferably ethoxylated acetylenic diols, and mixtures of such surfactants.

In particular embodiments, the non-ionic surfactant or mixture of non-ionic surfactants corresponds to the general formula:

R₁O-X-R₃ (IV)

wherein R₁ represents a linear or branched aliphatic or aromatic hydrocarbon group that may contain one or more catenory oxygen atoms and having at least 8 carbon atoms, preferably 8 to 18 carbon atoms. In a preferred embodiment, the residue R₁ corresponds to a residue (R')(R")C-wherein R' and R" are the same or different, linear, branched or cyclic alkyl groups. R₃ represents hydrogen or a C₁-C₃ alkyl group. X represents a plurality of ethoxy units that can also contain one or more propoxy unit. For example, X may represent - [CH₂CH₂O]ₙ-[R₂O]ₘ-R₃. R₂ represents an alkylene having 3 carbon atoms, n has a value of 0 to 40, m has a value of 0 to 40 and the sum of n+m is at least 2. When the above general formula represents a mixture, n and m will represent the average amount of the respective groups. Also, when the above formula represents a mixture, the indicated amount of carbon atoms in the aliphatic group R₁ may be an average number representing the average length of the hydrocarbon group in the surfactant mixture. Commercially available non-ionic surfactants or mixtures of non-ionic surfactants include those available from Clariant GmbH under the trade designation GENAPOL such as GENAPOL X-080 and GENAPOL PF 40. Further suitable non-ionic surfactants that are commercially available include those of the trade designation Tergitol TMN 6, Tergitol TMN 100X and Tergitol TMN 10 from Dow Chemical Company. Ethoxylated amines and amine oxides may also be used as emulsifiers.

Typical amounts are 1 to 12 % by weight based on the weight of the dispersion.

Other examples of non-ionic surfactants include sugar surfactants, such as glycoside surfactants as described, for example, in WO2011/014715 A2 (Zipplies et al).

Another class of non-ionic surfactants includes polysorbates. Polysorbates include ethoxylated, propoxylated or alkoxylated sorbitans and may further contain linear cyclic or branched alkyl residues, such as but not limited to fatty alcohol or fatty acid residues. Useful polysorbates include those available under the trade designation Polysorbate 20, Polysorbate 40, Polysorbate 60 and Polysorbate 80. Polysorbate 20, is a laurate ester of sorbitol and its anhydrides having approximately twenty moles of ethylene oxide for each mole of sorbitol and sorbitol anhydrides. Polysorbate 40 is a palmitate ester of sorbitol and its anhydrides having approximately twenty moles of ethylene oxide for each mole of sorbitol and sorbitol anhydrides. Polysorbate 60 is a mixture of stearate and palmitate esters of sorbitol and its anhydrides having approximately twenty moles of ethylene oxide for each mole of sorbitol and sorbitol anhydrides.

Polyelectrolytes, such as polyanionic compounds (for example polyanionic poly acrylates) may also be added to the dispersion in addition or instead of the surfactants described above.

The dispersions may further contain ingredients that may be beneficial when coating or impregnating the dispersion on a substrate, such as adhesion promoters, friction reducing agents, pigments. Optional components include, for example, buffering agents and oxidizing agents as may be required or desired for the various applications.

The dispersions comprising the copolymers according to the present disclosure can be used to produce coating compositions for coating various substrates such as metals, fluoropolymer layers. They may also be used to coat fabrics, such as, for example, glass fiber-based fabrics. Such fabrics may be used as architectural fabrics. Generally, the fluoropolymer dispersions may be blended with further components typically used to produce a final coating composition. Such further components may be dissolved or dispersed in an organic solvent such as toluene, xylene. Typical components that are used in a final coating composition include polymers such as polyamide imides, polyimides or polyarylene sulphides or inorganic carbides, such as silicium carbide, and metal oxides. They are typically employed as heat resistant adhesion promoters or primers. Still further ingredients such as pigments and mica particles may be added as well to obtain the final coating composition. The fluoropolymer dispersions typically represent about 10 to 80 % by weight of the final composition. Details on coating compositions for metal coatings and components used therein have been described in e.g. WO 02/78862, WO 94/14904, EP 1 016 466 A1, DE 2 714 593 A1, EP 0 329 154 A1, WO 0044576, and US 3,489,595.

The fluoropolymer dispersions may be used, for example, to laminate, coat and/or impregnate a substrate. The substrate or the treated surface thereof may be an inorganic or organic material. The substrate may be, for example a fiber, a fabric, a granule or a layer. Typical substrates include organic or inorganic fibers, preferably glass fibers, organic or inorganic fabrics, granules (such as polymer beads) and layers containing one or more organic polymers, including, for example, fluoropolymers. The fabrics may be woven or non-woven fabrics. The substrate may also be a metal or an article containing a metal surface or a fluoropolymer surface or layer, such as but not limited to PTFE surface or layers. In a preferred embodiment, the copolymers are used as additives for PTFE dispersions for providing coatings, for example anti-corrosive or low friction coatings of metal surfaces.

The fluoropolymers being in the form of a melt pellet or a granulate, may also be used for melt processing and are processed as solids. For melt processing and making shaped articles the tetrafluoroethylene copolymers are used in dry form and therefore have to be separated from the dispersion. The tetrafluoroethylene copolymers described herein may be collected by deliberately coagulating them from the aqueous dispersions by methods known in the art. In one embodiment, the aqueous emulsion is stirred at high shear rates to deliberately coagulate the polymers. Other salt-free methods include the addition of mineral acids. If salt content is not a problem salts can be added as coagulating agents, such as for example, chloride salts or ammonium carbonate. Agglomerating agents such as hydrocarbons like toluenes, xylenes may be added to increase the particle sizes and to form agglomerates. Agglomeration may lead to particles (secondary particles) having sizes of from about 0.5 to 1.5 mm.

Drying of the coagulated and/or agglomerated polymer particles can be carried out at temperatures of, for example, from 100 °C to 300 °C. Particle sizes of coagulated particles can be determined by electron microscopy. The average particle sizes can be expressed as number average by standard particle size determination software. The particle sizes may be further increased by melt-pelletizing. The melt pellets may have a particle size (longest diameter) of from at least 2, typically from about 2 to about 10 mm.

The coagulated fluoropolymers or melt pellets may be subjected to a fluorination treatment as known in the art to remove thermally unstable end groups. Unstable end groups include - CONH₂, - COF and -COOH groups. Fluorination may be conducted so as to reduce the total number of those end groups to less than 100 or less than 50 per 10⁶ carbon atoms in the polymer backbone. Suitable fluorination methods are described for example in US 4,743,658 or DE 195 47 909 A1. The amount of end groups can be determined by IR spectroscopy as described for example in EP 226 668 A1. Another advantage of the present disclosure is that the polymers obtained by the polymerization have predominantly - COOH end groups and low amounts of-COF end groups. This allows easier and more effective fluorination because -COOH end groups convert more readily than -COF end groups.

For making shaped articles the tetrafluoroethylene copolymers are brought to the melt (optionally after having been pelletized) and are then processed from the melt to shaped articles, for example, by injection molding, blow molding, melt extruding, melt spinning, transfer-molding. Additives may be added before or during the melt processing. Such articles include, for example, fibers, films, O-rings, containers, tubes, inner linings of hoses or containers or outer linings of wire, cables, components of pumps, housings. The copolymers typically show good demolding properties, i.e. they can be easily removed from the processing equipment, e.g. molds. The article comprises a coating and the coating comprises the tetrafluoroethylene copolymer.

Unless noted otherwise, all parts and percentages are by weight unless otherwise indicated are based on the total weight of the composition, which is 100 % by weight. The amounts of all ingredients of that composition add up to 100 % by weight.

### Examples

### Methods

In case the methods description refers to standards like DIN, ASTM, ISO and in case the year the standard was issued is not indicated, the version that was in force in 2015 is meant. In case no version was in force in 2015 anymore, for example because the standard has not been renewed or has expired, the version in force at the date closest to 2015 is to be used.

### Melt flow index:

The melt flow index (MFI), reported in g/10 min, was measured according to DIN 53735, ISO 12086 or ASTM D- 1238 at a support weight of 5.0 kg. The MFI was obtained with a standardized extrusion die of 2.1 mm diameter and a length of 8.0 mm. Unless otherwise noted, a temperature of 372°C was applied.

### Melting peaks:

Melting peaks of the fluororesins were determined according to ASTM 4591 by means of Perkin-Elmer DSC 7.0 under nitrogen flow and a heating rate of 10°C/min. The indicated melting points relate to the melting peak maximum.

### Particle size determination:

The latex particle size determination can be conducted by means of dynamic light scattering with a *Malvern Zetazizer 1000 HSA* in accordance to ISO/DIS 13321. The particle size is determined as volume-average and expressed as D₅₀. Prior to the measurements, the polymer latexes as yielded from the polymerisations is diluted with 0.001 mol/L KCl-solution, the measurement temperature was 20°C in all cases.

### Extraction of perfluorinated alkanoic acids:

The polymer latex (dispersion obtained after polymerization; was freezed dried to remove the water after spiking with a surrogate recovery standard (SRS) ¹³C₄-PFOA (perfluorooctanoic acid having 4 of its carbon atoms replaced by ¹³C isotopes; commercially available from Campro Scientific GmbH, Berlin, Germany) at a concentration of 25 ppb based on solid content of the dispersion. 1 g of the freeze-dried polymer material was treated with 3 ml methanol in a vial for 16 h at 250 rpm stirring speed and a temperature of 50 °C) to extract perfluorinated alkanoic acids. The mixture was centrifuged (∼10 min at 4400 rpm) and an aliquot of the supernatant was transferred into a 2ml autosampler vial.

The extract was analyzed for perfluorocarboxylic acids with reversed phase HPLC coupled with a triple quadrupole mass spectrometer (e.g. Agilent 6460 or ABSciex API 4000 QQQ-MS) in negative Multiple Reaction Mode (MRM) using analyte typical transitions, e.g. m/z 413 -> 369 for PFOA. The HPLC (Agilent 1200 or 1260) was equipped with an Agilent C18 column (Zorbax Eclipse XDB-C18 4.6x50mm 1.8 µm) and run in gradient mode with high purity water and methanol at 50 °C, both solvents were LC-MS grade and modified with 10 mmol ammonium acetate (gradient 15 % MeOH -> 100 % MeOH). The analytes were quantified using equivalent or similar isotope labelled internal standards (e.g. ¹³C₈-PFOA as internal standard for PFOA, available from Campro Scientific GmbH, Berlin, Germany) in a calibration range of 0.5 - 200 ng/ml analyte in methanolic extract, resulting in a lower level of quantification (LLOQ) related to polymer of 1.5 ppb and an upper limit of quantification (ULOQ) of 600 ppb. Analytes with concentrations higher than ULOQ were diluted with methanol into the calibration range and the analysis was repeated. The amounts for perfluorinated C₆- to C₁₂-carboxylic acids (CF₃-(CF)ₙ-COOH; n = 4-10) were determined this way.

For polymer samples other than dispersions, for example melt pellets, the method can be carried out in an analogous way (using 1 g of polymer sample and 3 ml of methanol). If necessary, depending on the size of the polymer in the sample, the sample may be ground to a particle size of less than 250 µm (for example following DIN 38414-14).

### Solid Content:

The solid content (fluoropolymer content) of the dispersions can be determined gravimetrically according to ISO 12086. A correction for non-volatile inorganic salts is not carried out. The solid content of the polymer dispersions is taken as polymer content.

### Comonomer Content:

The comonomer content of the polymer was determined by solid state NMR (method used in the examples). Samples were packed into a 3.2 mm rotor with a small amount of 2,2-bis(4-methylphenyl) hexafluoropropane as cross-integration standard. Diatomaceous earth was used instead of the fluoropolymer spacers in the rotor. Spectra were collected on a Varian 400 MHz NMRS solid state NMR spectrometer equipped with a 3.2 mm Varian HFXY MAS probe at 18 kHz MAS at 180°C. ¹H spectra were collected before and after ¹⁹F spectra.

Alternatively, the comonomer content in the polymers described can be determined by infrared spectroscopy using a Thermo Nicolet Nexus FT-IR spectrometer. The comonomer content can then calculated as 0.343 x the ratio of the 999 cm⁻¹ absorbance to the 2365 cm⁻¹ absorbance (compare US 6,395,848). HFP comonomer content - if present- can be determined as described in US 4,675,380.

### Example 1

A polymerization vessel with a total volume of 48.5 1 equipped with an impeller agitator system was charged with 291 deionized water and 210 g of a 30 % aqueous solution of propionic acid 2,2,3-trifluor-3-[1, 1, 2, 2, 3, 3-hexafluor-3-(trifluormethoxy) propoxy]-ammonium salt. The oxygen free vessel was then heated up to 63 ° C and the agitation system was set to 230 rpm. The vessel was charged with 110 mbar ethane chain transfer agent and 238 g CF₂=CF-CF₂-O-C₃F₇ (MA-3). The reactor was then pressurized with tetrafluoroethylene (TFE) to 13.0 bar absolute reaction pressure. Afterwards, the polymerization was initiated by 1.3 g ammonium persulfate (dissolved into water). As the reaction started, the reaction pressure of 13.0 bar absolute was maintained by feeding TFE and MA-3 into the gas phase with a feeding ratio MA-3 (kg)/TFE (kg) of 0.048 and the reaction temperature of 63 °C was also maintained. After feeding 12.2 kg TFE in a polymerization time of 277 min, the monomer feed was interrupted and the monomer valves were closed. The pressure was released, the reactor was purged with nitrogen and the polymer dispersion having a solid content of 29.8 % was removed at the bottom of the reactor. The latex particles showed 95 nm in diameter according to dynamic light scattering. A sample of the latex was freeze dried and analysed, the following results about alkanoic acids were obtained: C₈ 18 ppb; C₆ ∼2 ppb; C₇ ∼2 ppb; C₉ ∼7 ppb; C₁₀ ∼3 ppb, C₁₁ ∼2 ppb; C₁₂ ∼2 ppb.

Another quantity of 1000 ml of this dispersion was freeze coagulated at -18 °C in a refrigerator overnight. After defrosting, the so-obtained agglomerate was washed five times with deionized water under vigorous agitation and then dried in an oven at 130 °C for 12 hours. The thus obtained polymer showed a melting point maximum of 322 ° C and an MFI (372/5) of 1.9 g/10 min. The chemical composition was evaluated by means of ¹⁹F solid state NMR, it showed that the copolymer contained 1.1 % by weight of MA-3.

### Example 2

A PFA was prepared by polymerizing TFE and MA-3 (CF₂=CF-CF₂-O-GF₇) essentially following the procedure of Reference Example 1 but using a reaction temperature of 90 °C instead of 63 °C. After the polymerization was completed a sample of the latex was freeze-dried and the isolated polymer was analyzed (MFI: 2.2 g/10 min, m.p. 305 °C; 2.8 wt. % MA-3). The content of perfluorinated alkanoic acids was: C₈ 20 ppb, C₆ ∼3 ppb, C₇ < 2 ppb, C₉ ∼8 ppb, C₁₀ ∼3 ppb, C₁₁ ∼3 ppb, C₁₂ ∼3 ppb.

### Comparative Example

A PFA polymer was prepared in a 40 L-kettle at 63 °C essentially according to the procedure of example 1 but using PPVE (CF₂=CF-O-C₃F₇) instead of MA-3. After the polymerization was completed a sample of the latex was freeze-dried and analyzed. The polymer had an MFI of 2.0 g/10 min, a melting point of 308 °C and contained 4.1 % wt. of PPVE). The content of perfluorinated alkanoic acids was:
C₈ 470 ppb; C₆ ∼510 ppb; C₇ ∼30 ppb; C₉ ∼2100 ppb; C₁₀ ∼320 ppb, C₁₁ ∼4000 ppb; C₁₂ ∼ 280 ppb.

## Claims

1. A tetrafluoroethylene copolymer having a melting point of from 250 °C to 326 °C (according to ASTM 4591), a melt flow index (MFI at 372 °C and 5 kg load) of 0.5-50 grams /10 minutes (according to DIN 53735, ISO 12086 or ASTM D-1238) and having at least 89 % by weight of units derived from tetrafluoroethylene and from 0.5 to 6 % by weight of units derived from at least one perfluorinated alkyl allyl ether (PAAE) comonomer and from 0 to 4 % by weight of units derived from one or more co-polymerizable optional comonomers, wherein the total weight of the polymer is 100 % by weight and wherein the at least one PAAE corresponds to the general formula:
CF₂=CF-CF₂-O-Rf (I)
wherein Rf corresponds to a perfluoroalkyl unit selected from the group consisting of:
perfluoromethyl (CF₃), perfluoroethyl (C₂F₅), perfluoropropyl (C₃F₇) and perfluorobutyl (C₄F₉), preferably C₂F₅, C₃F₇ or C₄F₉.

2. The tetrafluoroethylene copolymer of any one of the preceding claims wherein Rf is linear and is selected from C₃F₇ or C₄F₉.

3. The tetrafluoroethylene copolymer of any one of the preceding claims having a melting point of from 286 °C to 326 °C.

4. The tetrafluoroethylene copolymer of any one of claims 1 to 3 having a melting point of from 250 °C to 290 °C and a melt flow index (MFI at 372 °C and 5 kg load) of 31 to 50 grams / 10 minutes.

5. The tetrafluoroethylene copolymer of any one of the preceding claims having
(i) from 0.5 to 4.0 % by weight of units derived from the at least one PAAE comonomer if the residue Rf in formula (I) is a perfluoromethyl; or
(ii) from 0.5 to 5.0 % by weight of units derived from the at least one PAAE comonomer if the residue Rf in formula (I) is a perfluoroethyl; or
(iii) from 0.5 to 6.0 % by weight of units derived from the at least one PAAE comonomer if the residue Rf in formula (I) is a perfluoropropyl or perfluorobutyl.

6. The tetrafluoroethylene copolymer of any one of the preceding claims having no unit derived from a perfluorinated alkyl vinyl ether (PAVE) comonomer.

7. The tetrafluoroethylene copolymer of any one of the preceding claims having from 94 to 99 % by weight units derived from tetrafluoroethylene and from 1 to 5 % by weight of units derived from the at least one PAAE and from up to 6 % by weight, preferably up to 4.4 % by weight of units derived from one or more copolymerizable optional comonomer selected from hexafluoropropene (HFP).

8. The tetrafluoroethylene copolymer of any one of the preceding claims having a total extractable amount of perfluorinated C₆-C₁₂ alkanoic carboxylic acids of less than 500 ppb based on the amount of the copolymer as determined by extraction of 1.0 of the copolymer with 3 ml of methanol for 16 hours at a temperature of 50 °C.

9. An aqueous dispersion comprising the tetrafluoroethylene copolymer of any one of the preceding claims.

10. The aqueous dispersion of claim 9 further comprising one or more fluorinated surfactants corresponding to the general formula
[R_{f}-O-L-COO⁻]ᵢXⁱ⁺ (II)
wherein L represents a linear, branched or cyclic, partially or fully fluorinated alkylene group or an aliphatic hydrocarbon group, R_{f} represents a partially or fully fluorinated aliphatic group or a partially or fully fluorinated aliphatic group interrupted with once or more than once with an oxygen ether atom, Xⁱ⁺ represents a cation having the valence i and i is 1, 2 or 3.

11. The tetrafluoroethylene copolymer of any one of claims 1 to 8 being in the form of a melt pellet or a granule.

12. A method for producing a tetrafluoroethylene copolymer according to any one of claims 1 to 8 comprising
(a) copolymerizing tetrafluoroethylene, the one or more perfluoro alkyl allyl ethers and, optionally, the one or more copolymerizable optional comonomers through aqueous emulsion polymerization in the appropriate amounts so as to obtain a reaction mixture containing the tetrafluoroethylene copolymer and wherein the polymerization is carried out without added perfluorinated alkanoic acid emulsifiers having from 6 to 12 carbon atoms, and, optionally, (b) subjecting the reaction mixture to anion exchange treatment in the presence of one or more non-fluorinated emulsifier, and, optionally (c) isolating the copolymer.

13. A method for making a shaped article wherein the method comprises bringing a tetrafluoroethylene copolymer according to any one of claims 1 to 8 to the melt and shaping the molten polymer.

14. An article comprising a tetrafluoroethylene copolymer according to any one of claims 1 to 8.

15. The article of claim 14 selected from the group consisting of a film, a tube, a hose, a cable, a component of a pump and a transfer-molded article.

16. The article of claim 14 wherein the articles comprises a coating and the coating comprises the tetrafluorethylene polymer.

## Patentansprüche

1. Tetrafluorethylencopolymer mit einem Schmelzpunkt von 250 °C bis 326 °C (nach ASTM 4591), einem Schmelzflussindex (MFI bei 372 °C und 5 kg Beladung) von 0,5-50 Gramm /10 Minuten (nach DIN 53735, ISO 12086 oder ASTM D-1238) und mit mindestens 89 Gew.-% aus Tetrafluorethylen gewonnenen Einheiten und zu 0,5 bis 6 Gew.-% aus mindestens einem PAAE-Comonomer (PAAE - perfluorierter Alkylallylether) gewonnenen Einheiten und zu 0 bis 4 Gew.-% aus einem oder mehreren copolymerisierbaren optionalen Comonomeren gewonnenen Einheiten, wobei das Gesamtgewicht des Polymers 100 Gew.-% beträgt und wobei das mindestens eine PAAE der folgenden allgemeinen Formel entspricht:
CF₂=CF-CF₂-O-Rf (I)
wobei Rf einer Perfluoralkyleinheit entspricht, die ausgewählt ist aus der Gruppe bestehend aus: Perfluormethyl (CF₃), Perfluorethyl (C₂F₅), Perfluorpropyl (C₃F₇) und Perfluorbutyl (C₄F₉), vorzugsweise C₂F₅, C₃F₇ oder C₄F₉.

2. Tetrafluorethylencopolymer nach einem der vorstehenden Ansprüche, wobei Rf linear ist und ausgewählt ist aus C₃F₇ oder C₄F₉.

3. Tetrafluorethylencopolymer nach einem der vorstehenden Ansprüche mit einem Schmelzpunkt von 286 °C bis 326 °C.

4. Tetrafluorethylencopolymer nach einem der Ansprüche 1 bis 3 mit einem Schmelzpunkt von 250 °C bis 290 °C und einem Schmelzflussindex (MFI bei 372 °C und 5 kg Beladung) von 31 bis 50 Gramm /10 Minuten.

5. Tetrafluorethylencopolymer nach einem der vorstehenden Ansprüche mit
(i) 0,5 bis 4,0 Gew.-% aus dem mindestens einen PAAE-Comonomer gewonnenen Einheiten, wenn der Rest Rf in Formel (I) ein Perfluormethyl ist; oder
(ii) 0,5 bis 5,0 Gew.-% aus dem mindestens einen PAAE-Comonomer gewonnenen Einheiten, wenn der Rest Rf in Formel (I) ein Perfluorethyl ist; oder
(iii) 0,5 bis 6,0 Gew.-% aus dem mindestens einen PAAE-Comonomer gewonnenen Einheiten, wenn der Rest Rf in Formel (I) ein Perfluorpropyl oder Perfluorbutyl ist.

6. Tetrafluorethylencopolymer nach einem der vorstehenden Ansprüche, bei dem keine Einheit aus einem PAVE-Comonomer (PAVE - perfluorierter Alkylvinylether) gewonnen wurde.

7. Tetrafluorethylencopolymer nach einem der vorstehenden Ansprüche mit zu 94 bis 99 Gew.-% aus Tetrafluorethylen gewonnenen Einheiten und zu 1 bis 5 Gew.-% aus dem mindestens einen PAAE gewonnenen Einheiten und zu bis zu 6 Gew.-%, vorzugsweise bis zu 4,4 Gew.-% aus dem einem oder den mehreren copolymerisierbaren optionalen Comonomeren, ausgewählt aus Hexafluorpropen (HFP), gewonnenen Einheiten.

8. Tetrafluorethylencopolymer nach einem der vorstehenden Ansprüche, mit einer extrahierbaren Gesamtmenge an perfluorierten C₆-C₁₂-Alkancarbonsäuren von weniger als 500 ppb, bezogen auf die Menge des Copolymers, bestimmt durch Extraktion von 1,0 des Copolymers mit 3 ml Methanol über 16 Stunden hinweg bei einer Temperatur von 50 °C.

9. Wässrige Dispersion, umfassend das Tetrafluorethylencopolymer nach einem der vorstehenden Ansprüche.

10. Wässrige Dispersion nach Anspruch 9, ferner umfassend ein oder mehrere fluorierte Tenside, die der folgenden allgemeinen Formel entsprechen
[R_{f}-O-L-COO⁻]ᵢXⁱ⁺ (II)
wobei L für eine lineare, verzweigte oder cyclische, teilweise oder vollständig fluorierte Alkylengruppe oder eine aliphatische Kohlenwasserstoffgruppe steht, Rf für eine teilweise oder vollständig fluorierte aliphatische Gruppe oder eine teilweise oder vollständig fluorierte aliphatische Gruppe steht, die einmal oder mehr als einmal durch ein Sauerstoffetheratom unterbrochen ist, Xⁱ⁺ für ein Kation mit der Valenz i steht und i 1, 2 oder 3 ist.

11. Tetrafluorethylencopolymer nach einem der Ansprüche 1 bis 8, das in Form eines Schmelzpellets oder eines Granulats vorliegt.

12. Verfahren zum Herstellen eines Tetrafluorethylencopolymers nach einem der Ansprüche 1 bis 8, umfassend:
(a) Copolymerisieren von Tetrafluorethylen, dem einen oder den mehreren Perfluoralkylallylethern und gegebenenfalls dem einen oder den mehreren copolymerisierbaren optionalen Comonomeren durch Wässrigemulsionspolymerisation in den geeigneten Mengen, um ein Reaktionsgemisch zu erhalten, das das Tetrafluorethylencopolymer enthält, und wobei die Polymerisation ohne Zugabe von perfluorierten Alkansäureemulgatoren mit 6 bis 12 Kohlenstoffatomen durchgeführt wird, und gegebenenfalls, (b) Durchführen einer Anionenaustauschbehandlung in Gegenwart von einem oder mehreren nicht fluorierten Emulgatoren an dem Reaktionsgemisch und gegebenenfalls (b) Isolieren des Copolymers.

13. Verfahren zum Herstellen eines Formartikels, wobei das Verfahren ein Einbringen eines Tetrafluorethylencopolymers nach einem der Ansprüche 1 bis 8 in die Schmelze und ein Formen des geschmolzenen Polymers umfasst.

14. Artikel, umfassend ein Tetrafluorethylencopolymer nach einem der Ansprüche 1 bis 8.

15. Artikel nach Anspruch 14, ausgewählt aus der Gruppe, bestehend aus einer Folie, einem Röhrchen, einem Schlauch, einem Kabel, einem Bestandteil einer Pumpe und einem spritzgepressten Artikel.

16. Artikel nach Anspruch 14, wobei der Artikel eine Beschichtung umfasst und die Beschichtung das Tetrafluorethylenpolymer umfasst.

## Revendications

1. Copolymère de tétrafluoroéthylène ayant un point de fusion allant de 250 °C à 326 °C (selon ASTM 4591), un indice d'écoulement à l'état fondu (IEF à 372 °C et une charge de 5 kg) de 0,5 à 50 grammes/10 minutes (selon DIN 53735, ISO 12086 ou ASTM D-1238) et ayant au moins 89 % en poids de motifs dérivés de tétrafluoroéthylène et de 0,5 à 6 % en poids de motifs dérivés d'au moins un comonomère d'éther alkylallylique perfluoré (PAAE) et de 0 à 4 % en poids de motifs dérivés d'un ou plusieurs comonomères facultatifs copolymérisables, dans lequel le poids total du polymère vaut 100 % en poids et dans lequel l'au moins un PAAE correspond à la formule générale :
CF₂=CF-CF₂-O-Rf (I)
dans lequel Rf correspond à un motif perfluoroalkyle choisi dans le groupe constitué de : perfluorométhyle (CF₃), perfluoroéthyle (C₂F₅), perfluoropropyle (C₃F₇) et perfluorobutyle (C₄F₉), de préférence C₂F₅, C₃F₇ ou C₄F₉.

2. Copolymère de tétrafluoroéthylène selon l'une quelconque des revendications précédentes dans lequel Rf est linéaire et est choisi parmi C₃F₇ ou C₄F₉.

3. Copolymère de tétrafluoroéthylène selon l'une quelconque des revendications précédentes ayant un point de fusion allant de 286 °C à 326 °C.

4. Copolymère de tétrafluoroéthylène selon l'une quelconque des revendications 1 à 3 ayant un point de fusion allant de 250 °C à 290 °C et un indice d'écoulement à l'état fondu (IEF à 372 °C et une charge de 5 kg) de 31 à 50 grammes/10 minutes.

5. Copolymère de tétrafluoroéthylène selon l'une quelconque des revendications précédentes ayant
(i) de 0,5 à 4,0 % en poids de motifs dérivés de l'au moins un comonomère de PAAE si le résidu Rf dans la formule (I) est un perfluorométhyle ; ou
(ii) de 0,5 à 5,0 % en poids de motifs dérivés de l'au moins un comonomère de PAAE si le résidu Rf dans la formule (I) est un perfluoroéthyle ; ou
(iii) de 0,5 à 6,0 % en poids de motifs dérivés de l'au moins un comonomère de PAAE si le résidu Rf dans la formule (I) est un perfluoropropyle ou perfluorobutyle.

6. Copolymère de tétrafluoroéthylène selon l'une quelconque des revendications précédentes n'ayant aucun motif dérivé d'un comonomère d'éther alkylvinylique perfluoré (PAVE).

7. Copolymère de tétrafluoroéthylène selon l'une quelconque des revendications précédentes ayant de 94 à 99 % en poids de motifs dérivés de tétrafluoroéthylène et de 1 à 5 % en poids de motifs dérivés de l'au moins un PAAE et un maximum de 6 % en poids, de préférence un maximum de 4,4 % en poids de motifs dérivés d'un ou plusieurs comonomères facultatifs copolymérisables choisis parmi hexafluoropropène (HFP).

8. Copolymère de tétrafluoroéthylène selon l'une quelconque des revendications précédentes ayant une quantité totale extractible d'acides carboxyliques alcanoïques en C₆ à C₁₂ perfluorés inférieure à 500 parties par milliard sur la base de la quantité du copolymère telle que déterminée par extraction de 1,0 du copolymère avec 3 mL de méthanol pendant 16 heures à une température de 50 °C.

9. Dispersion aqueuse comprenant le copolymère de tétrafluoroéthylène selon l'une quelconque des revendications précédentes.

10. Dispersion aqueuse selon la revendication 9 comprenant en outre un ou plusieurs agents tensioactifs fluorés correspondant à la formule générale
[R_{f}-O-L-COO⁻]ᵢXⁱ⁺ (II)
dans laquelle L représente un groupe alkylène partiellement ou complètement fluoré, linéaire, ramifié ou cyclique ou un groupe hydrocarboné aliphatique, Rf représente un groupe aliphatique partiellement ou complètement fluoré ou un groupe aliphatique partiellement ou complètement fluoré interrompu une fois ou plus d'une fois avec un atome d'oxygène d'éther, Xⁱ⁺ représente un cation ayant la valence i et i vaut 1, 2 ou 3.

11. Copolymère de tétrafluoroéthylène selon l'une quelconque des revendications 1 à 8 étant sous la forme d'une pastille de masse fondue ou d'un granule.

12. Procédé de production d'un copolymère de tétrafluoroéthylène selon l'une quelconque des revendications 1 à 8 comprenant
(a) la copolymérisation de tétrafluoroéthylène, du ou des éthers perfluoro-alkylallyliques et, facultativement, du ou des comonomères facultatifs copolymérisables par l'intermédiaire d'une polymérisation en émulsion aqueuse dans les quantités appropriées de façon à obtenir un mélange réactionnel contenant le copolymère de tétrafluoroéthylène et dans lequel la polymérisation est effectuée sans émulsifiant acide alcanoïque perfluoré ajouté ayant de 6 à 12 atomes de carbone, et, facultativement, (b) la soumission du mélange réactionnel à un traitement d'échange anionique en présence du ou des émulsifiants non fluorés, et, facultativement (c) l'isolement du copolymère.

13. Procédé de fabrication d'un article profilé dans lequel le procédé comprend le fait d'amener un copolymère de tétrafluoroéthylène selon l'une quelconque des revendications 1 à 8 en fusion et la mise en forme du polymère fondu.

14. Article comprenant un copolymère de tétrafluoroéthylène selon l'une quelconque des revendications 1 à 8.

15. Article selon la revendication 14 choisi dans le groupe constitué d'un film, un tube, un tuyau flexible, un câble, un composant d'une pompe et un article moulé par transfert.

16. Article selon la revendication 14 dans lequel les articles comprend un revêtement et le revêtement comprend le polymère de tétrafluoroéthylène.
